# EUROPEAN PATENT SPECIFICATION

(11) **EP 0 493 846 B1**
(45) Date of publication and mention of the grant of the patent: **23.02.1994**
(21) Application number: 91203151.5
(22) Date of filing: 03.12.1991
(51) Int. Cl.: C10M 149/10, C08F 220/18

(54) **Multifunctional additive for lubricating oils**
Mehrzweckzusatz für Schmieröle
Additif multifonctionnel pour huiles lubrifiantes

(30) Priority: 14.12.1990 IT 2239690
(43) Date of publication of application: 08.07.1992
(73) Proprietor: MINISTERO DELL' UNIVERSITA' E DELLA RICERCA SCIENTIFICA E TECNOLOGICA, 00196 Roma (IT)
(72) Inventor: Gambini, Paola, I-20143 Milan (IT); Koch, Paolo, I-20077 Melegnano, Milan (IT); Santambrogio, Alberto, I-20124 Milan (IT)
(74) Representative: Fusina, Gerolamo

(56) References cited:
- EP-A- 0 206 455
- EP-A- 0 376 138
- DE-A- 1 444 878
- US-A- 3 864 099
- US-A- 4 036 768
- US-A- 4 941 985
- US-A- 5 013 468

## Description

This invention relates to a lubricating oil viscosity index improver (V.I.I.) having dispersing and antioxidizing properties. It is known in the art to add to a lubricating oil an oil-soluble polymer (a V.I.I.), which is capable of improving the rheological properties of the oil as temperature is varied: for example, a polymer, or a copolymer of an acrylic or a methacrylic alkyl ester which contains a number of carbon atoms sufficient to render the ester concerned oil-soluble. It is also known that it is beneficial to introduce into such an oil-soluble polymer a copolymerizable nitrogen-containing monomer so as to impart to the resultant product dispersing properties in addition to the improvement of the viscosity index. Such a polymerizable nitrogen-containing dispersant monomer is generally selected from vinylimidazoles, vinylpyrrolidones, vinylpyridines and N,N-dialkyl-aminoethyl methacrylates, as disclosed, for instance, in GB-A-1 272 161, GB-A-1 333 733, US-A-3 732 334 and BE-A-874 068.

Viscosity Index improving copolymers also possessing dispersing and antioxidizing properties are also known for reducing the formation of sludges and the oxidation of a lubricating oil in an internal combustion engine: an example is disclosed in US-A-4 899 723, which describes ethylene-propylene copolymers onto which monomers are grafted, which contain a nitrogen atom and a sulphur atom, such as 4-methyl-5-vinylthiazole, which is a dispersant and an antioxidant in addition to its being a Viscosity Index improver.

The use of of such multifunctional polymers also improves the performance of other additives to the oil, such as antiwear additives as zinc dithiophosphates and dispersants such as polyisobutenyl succinimides, detergents such as calcium sulphonates, antioxidants such as sterically hindered phenols and others. A reduction of the amounts of such additives becomes sometimes possible. EP-A-376 138 discloses a copolymer of C₁₄-C₂₂ methacrylic acid alkyl esters and a comonomer having the general formula H₂C=CR₁R₂, wherein R₁ is hydrogen or a methyl, and R₂ is selected from a number of various substituents.

US-A-4 036 768 discloses an interpolymer of dialkylaminoalkyl methacrylate, C₁-C₆ alkyl methacrylate, C₁₀-C₁₄ alkyl methacrylate and C₁₆-C₂₀ alkyl methacrylate monomers and a liquid alkylbenzene having a mol.wt. of from 100 to 5000. US-A-3 864 099 discloses a copolymer of a monomeric aziridinyl ethyl acrylate or methacrylate with a monomeric alkyl ester of the acrylic or the methacrylic acid. EP-A-0 206 455 discloses a number of polymers of ethylenically unsaturated compounds which are obtained by reacting a reactant containing ethylenically unsaturation and an epoxide moiety with a second reactant selected from -NH₂, NHR₄,-OH, -SH or -COOH, wherein R₄ is alkyl, aralkyl, alkaryl, cycloalkyl or aryl.

The present invention provides sulphur-free polymeric additives for lubricating oils which effectively improve the Viscosity Index and have dispersing and antioxidizing properties.

According to one of its aspects, the invention, provides:

A polymeric viscosity-index improver, dispersant and antioxidant additive for lubricating oils for internal combustion engines, having the general formula: 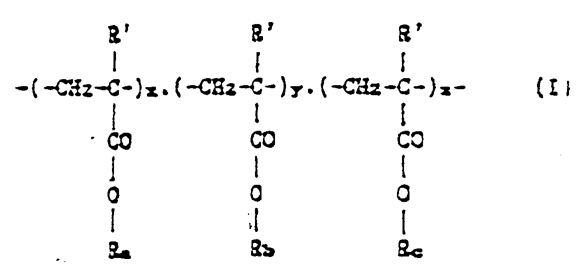
as obtained by copolymerizing unsaturated esters, characterized in that:
x is from 85% to 90% by weight;
y is from 3% to 7% by weight;
z is from 4% to 6% by weight;
R' is methyl, whereby the copolymerized esters are methacrylates;
Ra is an alkyl derived from mixture of natural or synthetic, linear or branched C₁₀-C₂₀ primary alcohols;
Rb is methyl, and
Rc is the radical of Z,Z,6,6-tetramethyl-piperidine-4-ol, whereby the monomer CH₂=CR'-COORc is the 2,2,6,6-tetramethyl-piperidine-4-ol methacrylate.

In a preferred embodiment of the additive of formula (I), the methacrylate, of which Rc is the radical, is a mixture consisting of:
from 50% to 85% by weight of 2,2,6,6, tetramethyl-piperidine-4-ol methacrylate, and from 15% to 50% by weight of N,N-dimethylaminoethanol methacrylate, or N-(3-hydroxypropyl)-N'-methylpiperazine methacrylate, or any admixture of the two.

According to another of its aspects, the invention provides a process for preparing the additive as defined by the general formula (I), which comprises the step of copolymerizing a mixture composed of:
- from 85% to 90% by weight of Ra methacrylates, in the form of methacrylic acid esters of mixtures of C₁₀-C₂₀ natural or synthetic, linear or branched, primary alcohols;
- from 3% to 7% by weight of Rb methacrylates, in the form of methacrylic acid esters of methanol, and
- from 4% to 6% by weight of Rc methacrylates, in the form of methacrylic acid esters of 2,2,6,6-tetramethyl-piperidine-4-ol, or of a mixture consisting of from 50% to 85% by weight of methacrylic esters of 2,2,6,6-tetramethyl-piperidine-4-ol and from 15% to 50% of methacrylic acid ester of N,N-dimethylaminoethanol, or of N-(3-hydroxypropyl)-N'-methylpiperazine, or of a mixture of the two.

The invention also provides a (meth)acrylate, not described heretofore, which has the general formula: 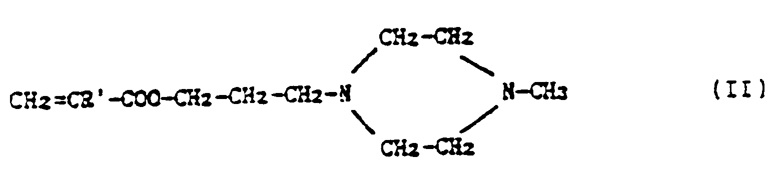
wherein R' is hydrogen or a methyl: this compound belongs to the Rc (meth)acrylate class and is a useful dispersant monomer when copolymerized with other acrylates or alkyl acrylates. To polymerize, the monomers concerned are degassed, individually or all together, mixed and diluted with an inert solvent, a nineral oil, eg. Solvent Neutral, kin.visc.5,4.10⁻⁶ m²/s (5,4 cSt) at 100°C. The reaction mixture is then heated in the absence of oxygen to a temperature of from 70°C to 130°C, in the presence of a radicalic initiator, to be added before of after heating, until from 60% to 100% of the (meth)acrylic esters have been copolymerized. Appropriate radicalic catalysts are selected from:
tert.butyl-peroctoate;
tert.butyl-per-(2-ethyl)-hexanoate;
tert.butyl-per-isononanoate;
tert.butyl-perbenzoate;
azo-bis-isobutyronitrile;
dilauroyl peroxide, and
bis(4-tert.butylcyclohexyl) peroxidicarbonate,
to be used in an amount of from 0,2% to 3% by weight relative to the methacrylic esters. Sulphurated substances such as aliphatic mercaptans, thioglycols and thiophenols, eg.tert.dodecylmercaptan and ethanedithiol may be present in the reaction mixture as molecular-weight regulators, and are so active in an amount of from 0,01% to 0,5% by weight relative to the weight of the (meth)acrylic esters. The progress of the reaction can be monitored by infrared analysis. The monomer conversion generally reaches the stated value within a time of between 0.5 and 4 hours for the aforestated temperatures and other conditions. In this manner a solution of the additive of general formula (I) in an inert solvent is obtained. The copolymer may be isolated as such by removing the solvent by known methods (such as under reduced pressure).

The additive can be added as such to the lubricating oil, but its addition is preferably facilitated by using a concentrate containing 25-95% by weight, and preferably 40-70%, of the additive dissolved in a solvent-diluent, which in a preferred embodiment of the present invention can be the same mineral oil as that used as the inert solvent for preparing the additive of formula (I).

The present invention also provides a lubricating oil composition containing mainly lubricating oil plus a quantity of the described additive effective as a V.I.I., dispersant and antioxidant.

This effective quantity is generally between 0.5% and 10%, and preferably between 1,2% and 6% by weight, with respect to the polymer as such. The additive of the present invention can be used in finished lubricants (for example for automotive use) in combination with other usual additives such as dispersants, detergents, antiwear agents, antioxidants etc. The following examples are given to illustrate the present invention.

### EXAMPLE 1

148 g of SN 150 mineral oil, 130.31 g of C₁₂-C₁₈ linear methacrylic alcohol monomers and 1.7 g of 2,2,6,6-tetramethylpiperidin-4-ol methacrylate are fed into a reactor with a diathermic oil heating jacket and fitted with an anchor stirrer, a thermocouple for temperature measurement and a nitrogen injector, and the system is left stirring for one hour while injecting nitrogen. While the reaction is proceeding, 5 g of N-(3-hydroxypropyl)-N'-methyl-piperazine methacrylate, 15 g of methyl methacrylate and 0.9 g of tert-butylperoctoate (TBPO) as polymerization initiator are degassed separately. The degassed monomers are then added to the reactor, its temperature raised to 100°C and the initiator added. Polymerization commences immediately and is strongly exothermic, the temperature control system therefore being set to maintain this temperature constant until the reaction is complete (2-3 hours). The progress of the reaction is followed by I.R. analysis, the progressive disappearance of the bands relative to the double methacrylic monomer bond at 1320-1340 cm⁻¹ being noted.

The final solution of the polymer in SN 150 has a kinematic viscosity of 783,83.10⁻⁶ m²/s (783,83) cSt at 100°C.

### Evaluation of the additive as a viscosity index improver

Kinematic viscosity of a 10% solution in SN 150 at 100°C: 14,77.10⁻⁶ m²/s (14,77cSt).

Kinematic viscosity of a 10% solution in SN 150 at 40°C: 84,74.10⁻⁶ m²/s cSt.

Kinematic viscosity of a 10% solution in SN 150 at -20°C: 2900.10⁻³ Ns/m² (2900cP).

Viscosity index: 184.

### Evaluation of dispersant properties

The dispersant properties of the additive are evaluated by the so-called asphaltene test.

Asphaltenes are produced by oxidation of naphthenic oils in the presence of cupric naphthenate as catalyst. The test method is as follows: 50 mg of the copolymer of which the dispersant properties are to be measured are made up to 20 g with SN 150 under slight heating and stirring. A solution consisting of 30 mg of asphaltenes dissolved in 10 ml of methylene chloride is prepared separately and is added to the dissolved polymer. The solution is placed in an oven at 150°C for one hour to remove volatile substances and is then allowed to cool. It is transferred into a turbidimeter cuvette and the turbidity value read from the instrument, this value increasing with decreasing dispersant capacity of the polymer. After the first reading the solution is centrifuged at 7500 rpm for 10 minutes, and then a second turbidimeter reading is taken. The dispersion index D.I. is given by the equation:$\text{D.I. = (turbidity after centrif./turbidity before centrif.) x 100.}$

The absolute turbidity values also constitute a factor of merit so that for equal D.I. values an additive which gives lower absolute turbidity is preferred.

The dispersion index of the copolymer prepared in this manner was found to be 100, the absolute turbidity values being 25/25. A commercial comparison additive gave a dispersion index of 100 and an absolute turbidity of 73/73.

### Evaluation of antioxidant properties

20% solutions of the additive in SN 450 containing 0.38% of ferric naphthenate as oxidation catalyst were used. The solution obtained is temperature controlled at 165°C and kept in air flowing at a rate of 16,5 l/h. Samples are taken at hourly intervals and are tested for increase in IR oxidation band absorbance at 1700 cm⁻¹. The results are compared with those for oil samples without additive. The results were as follows:

Sample without additive:
- IR absorbance after 2 hours = 14,59; after 20 hours = 83,93.
   Sample with additive:
- IR absorbance after 2 hours = 13,26; after 20 hours = 65,99.

Again to evaluate the antioxidant properties of the prepared additive, differential thermal analysis was used to determine the onset temperature of the exothermal peak corresponding to substrate oxidation. The analyses were carried out on 20% solutions of polymer in SN 450 containing 0,38% of ferric naphthenate operating with oxygen at 10 bar and with a heating rate of 5°C/min over a 50-350°C range. The oil without additive had an onset temperature of 174,7°C and the oil with additive an onset temperature of 180,2°C.

### Engine tests

To evaluate the engine properties of the polymer A obtained in Example 1, a SAE 15W50 grade lubricant was used containing 6.5 wt% of the polymer under examination and 10.5 wt% of conventional additives consisting of a zinc dithiophosphonate, a superbasic calcium sulphonate, a polyisobutenyl succinimide and a sterically hindered phenol. 6,5% of a conventional viscosity index improver based on ethylene-propylene copolymers was also used.

The engine tests used for evaluating the lubricant performance were: VE sequence (ASTM STP 315H PTIII procedure), IIIE sequence (ASTM STP 315H PTII procedure), Mercedes M102E black sludge test (CEC L-41-T-88 procedure) and Petter W1 (CEC L-02-A-78 procedure). It is well known that these tests, incorporated into official CCMC specifications, evaluate the dispersant and antioxidant performance of the lubricant and are considered to have been satisfied if the results of the evaluation of the various engine components at the end of the test fall within the limits stated in the specification.

The results of the tests on the described lubricant and the respective limiting values of the CCMC specification for class G4 lubricants are given in the following tables.

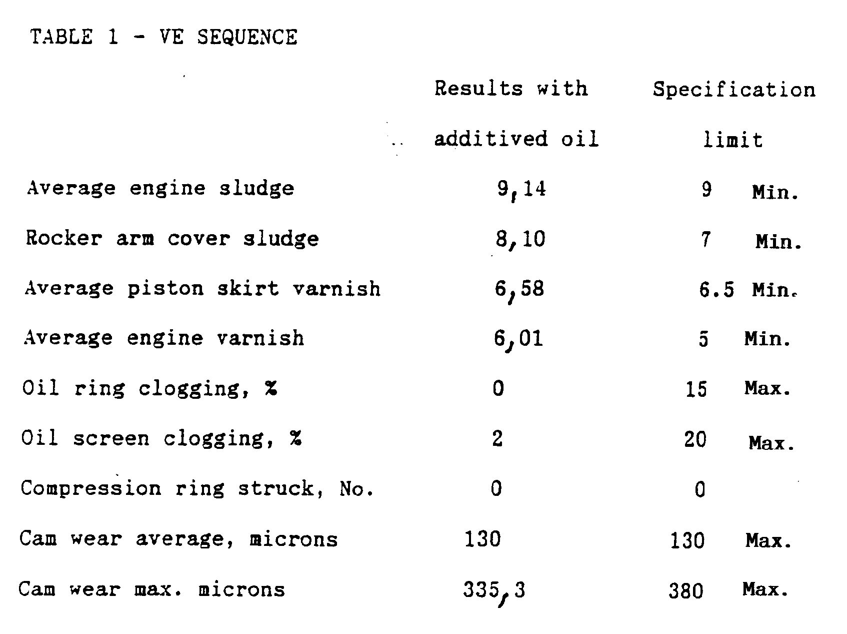

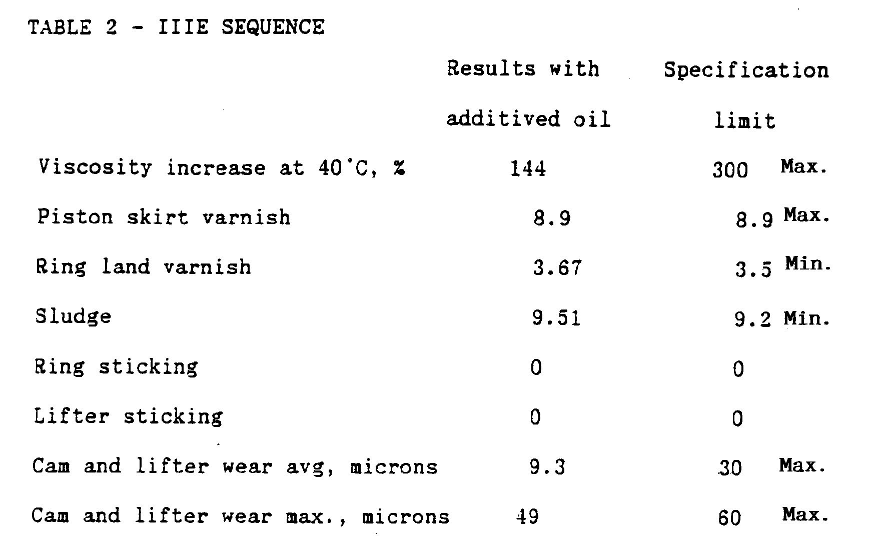

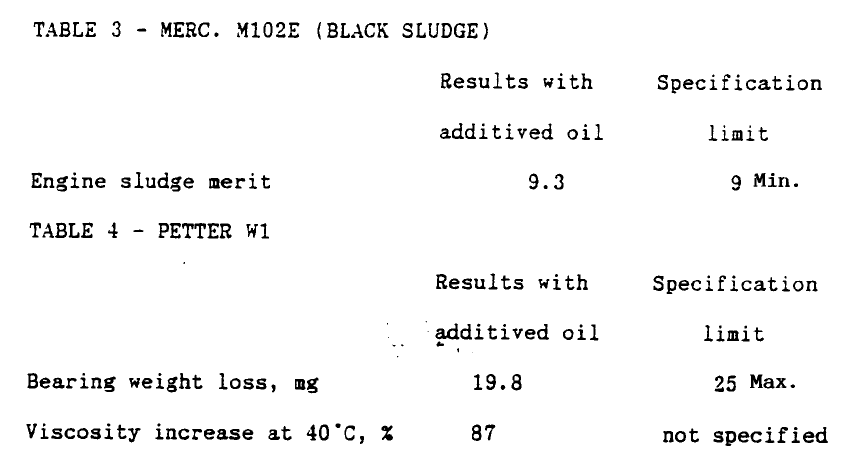

### EXAMPLE 2

148 g of SN 150 mineral oil, 125,09 g of C₁₂-C₁₈ linear methacrylic alcohol monomers and 11,8 g of 2,2,6,6-tetramethylpiperidin-4-ol methacrylate are fed into a reactor with a diathermic oil heating jacket and fitted with an anchor stirrer, a thermocouple for temperature measurement and a nitrogen injector, and the system is left stirring for one hour while injecting nitrogen. 15 g of methyl methacrylate and 0,9 g of tert-butylperoctoate as polymerization initiator are degassed separately. The methyl methacrylate is then added and the reaction mixture temperature raised to 100°C. On reaching this temperature the catalyst is added. Polymerization commences immediately and is strongly exothermic, the temperature control system therefore being set to maintain this temperature constant until the reaction is complete (2-3 hours). The progress of the reaction is followed by I.R. analysis, the progressive disappearance of the bands relative to the double methacrylic monomer bond at 1320-1340 cm⁻¹ being noted.

The characteristics of the product obtained are determined as described in Example 1. The results are as follows:
Kinematic Viscosity undiluted at 100°C: 1100.10⁻⁶ m²/s (1100 cSt)
Kinematic Viscosity 10% solution in SN 150 at 100°C: 13,93.10⁻⁶ m²/s (13,93 cSt)
Kinematic Viscosity 10% solution in SN 150 at 40°C: 78,92.10⁻⁶ m²/s (78,92 cSt)
Viscosity index: 183
Dynamic Viscosity 10% solution in SN 150 at -20°C: 3000.10⁻³ Ns/m² (3000 cP)
Dispersion index: 100%
Absolute turbidity values: 118/118
Oxidation stability:
- non-additived oil sample: IR absorbance
   after 2 hours 14,59
   after 20 hours 83,93
- oil sample containing 20 wt% polymer:

IR absorbance after 2 hours 7,20; after 20 hours 71,40
Differential thermal analysis: onset temperature = 189,2°C.

### EXAMPLE 3 - Preparation of N-(3-hydroxypropyl)-N'-methylpiperazine methacrylate

N-(3-hydroxypropyl)-N'-methylpiperazine and methylmethacrylate are introduced in a 1:2 molar ratio into a cylindrical glass reactor with a diathermic oil heating jacket and fitted with an anchor stirrer, a thermocouple for temperature measurement and a distillation column with a reflux head. 0.05% of phenothiazine by weight with respect to the reaction mass is added as polymerization inhibitor together with a basic catalyst such as dibutyltin dilaurate in a molar ratio to the initial alcohol of 1:135. The residual pressure is reduced to 560 mmHg by a vacuum pump connected to the column overhead condenser, and the system temperature is gradually increased to 95°C. The reaction mass boils at this temperature, the methanol-methylmethacrylate azeotrope condensing at the top of the column with a weight composition of 85:15. When the temperature at the top of the column has stabilized at about 54-55°C, ie the azeotrope boiling point, this is withdrawn through a reflux divider, the reaction being progressively urged to completion, its progress being followed by gas chromatography analysis. After about 9 hours, when the converted alcohol exceeds 98%, the excess methyl methacrylate, the unreacted alcohol and any methanol still present are removed by high vacuum distillation, and the methacrylate obtained in this manner is distilled.
- boiling point: 116°C/2 mmHg
- yield after distillation; 95%
- analysis by elements (theoretical values in parentheses): C%= 63,4 (63,6); H%= 10,1 (9,8); N%= 12,1 (12,3)
- I.R. (liquid film): characteristic absorption at 1720 cm⁻¹ (carbonyl group) and at 1640 cm⁻¹ (C=C double bond).

## Claims (Claims for the following Contracting State(s): AT, BE, CH, DE, DK, FR, GB, GR, LI, LU, NL, SE)

1. A polymeric viscosity-index improver, dispersant and antioxidant additive for lubricating oils for internal combustion engines, having the general formula: 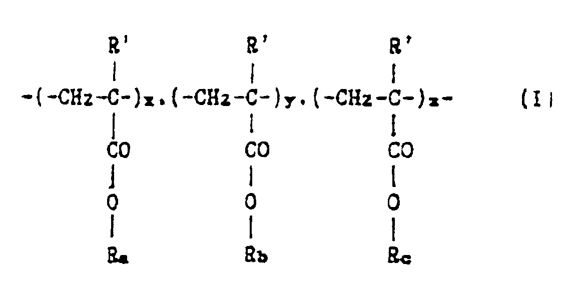 as obtained by copolymerizing unsaturated esters, characterized in that:
x is from 85% to 90% by weight;
y is from 3% to 7% by weight;
z is from 4% to 6% by weight;
R' is methyl, whereby the copolymerized esters are methacrylates;
Ra is an alkyl derived from mixture of natural or synthetic, linear or branched C₁₀-C₂₀ primary alcohols;
Rb is methyl, and
Rc is the radical of 2,2,6,6-tetramethyl-piperidine-4-ol, whereby the monomer CH₂=CR'-C00Rc is the 2,2,6,6-tetramethyl-piperidine-4-ol methacrylate.

2. Additive according to Claim 1, wherein the methacrylate of which Rc is the radical, is a mixture consisting of:
from 50% to 85% by weight of 2,2,6,6, tetramethyl-piperidine-4-ol methacrylate, and from 15% to 50% by weight of N,N-dimethylaminoethanol methacrylate, or N-(3-hydroxypropyl)-N'-methylpiperazine methacrylate, or any admixture of the two.

3. Process for preparing the additive as defined in Claim 1, comprising the step of copolymerizing a mixture composed of:
- from 85% to 90% by weight of Ra methacrylates, in the form of methacrylic acid esters of mixtures of C₁₀-C₂₀ natural or synthetic, linear or branched, primary alcohols;
- from 3% to 7% by weight of Rb methacrylates, in the form of methacrylic acid esters of methanol, and
- from 4% to 6% by weight of Rc methacrylates, in the form of methacrylic acid esters of 2,2,6,6-tetramethyl-piperidine-4-ol, or of a mixture consisting of from 50% to 85% by weight of methacrylic esters of 2,2,6,6-tetramethyl-piperidine-4-ol and from 15% to 50% of methacrylic acid ester of N,N-dimethylaminoethanol, or of N-(3-hydroxypropyl)-N'-methylpiperazine, or of a mixture of the two.

4. Process according to Claim 3, wherein the copolymerization is carried within an inert solvent-diluent, in the absence of oxygen, at a temperature of from 70°C to 130°C, and in the presence of an amount of from 0,2 to 3 parts by weight, relative to 100 parts by weight of all the methacrylates which are present, of a radicalic polymerization initiator, until such time as the conversion rating of the monomers is of from 60% to 100%.

5. Process according to Claim 4, wherein the inert solvent-diluent is a mineral oil.

6. Process according to Claim 3, wherein the polymerization catalyst is selected from tert.butyl peroctoate, tert.butyl per(2-ethyl) hexanoate, tert.butyl perbenzoate, azo-bis-isobutyronitrile, dibenzoyl peroxide, dilauroyl peroxide and bis-(4-tert.butylcyclohexyl) peroxydicarbonate.

7. Process according to Claim 3, wherein the copolymerization reaction is carried out in the presence of an amount of from 0,005% to 0,6% by weight, relative to all the methacrylates, of a sulphurated molecular-weight regulator selected from aliphatic mercaptans, thioglycols and thiophenols.

8. Methacrylates having the general formula: 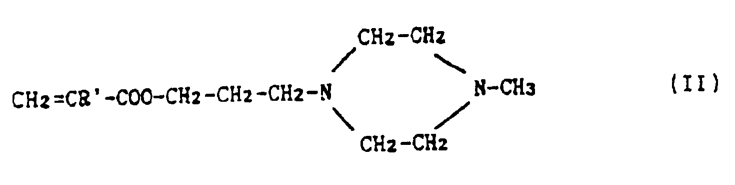 wherein R' is a hydrogen atom or a methyl.

9. Lubricant-oil concentrate containing from 25% to 95% by weight of the additive as defined in Claim 1, the balance being a mineral oil.

10. A concentrate according to Claims 4 and 9, wherein said mineral oil is the same as used as an inert solvent-diluent in the preparation of the additive defined in Claim 1.

11. A lubricating composition containing from 0,5% to 10% by weight of the additive as defined in Claim 1, the balance being a conventional lubricant oil.

12. A lubricating composition according to Claim 11, containing from 1,2% to 6% by weight of the additive as defined in Claim 1, the balance being a conventional lubricant oil.

## Claims (Claims for the following Contracting State(s): ES)

1. Process for preparing a polymeric viscosity-index improver, dispersant and antioxidant additive for lubricating oils for internal combustion engines, having the general formula: 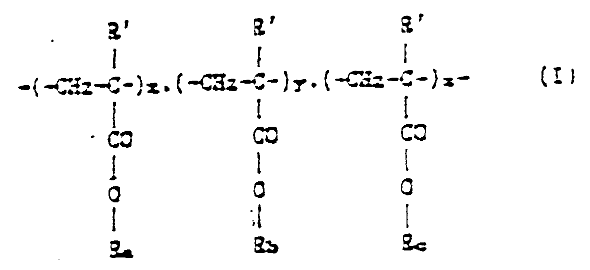 as obtained by copolymerizing unsaturated esters, where
x is from 85% to 90% by weight;
y is from 3% to 7% by weight;
z is from 4% to 6% by weight;
R' is methyl, whereby the copolymerized esters are methacrylates;
Ra is an alkyl derived from mixture of natural or synthetic, linear or branched C₁₀-C₂₀ primary alcohols;
Rb is methyl, and
Rc is the radical of 2,2,6,6-tetramethyl-piperidine-4-ol, whereby the monomer CH₂=CR'-COORc is the 2,2,6,6-tetramethyl-piperidine-4-ol methacrylate,
characterized by comprising the step of copolymerizing a mixture composed of:
- from 85% to 90% by weight of Ra methacrylates, in the form of methacrylic acid esters of mixtures of C₁₀-C₂₀ natural or synthetic, linear or branched, primary alcohols;
- from 3% to 7% by weight of Rb methacrylates, in the form of methacrylic acid esters of methanol, and
- from 4% to 6% by weight of Rc methacylates, in the form of methacrylic acid esters of 2,2,6,6-tetramethyl-piperidine-4-ol, or of a mixture consisting of from 50% to 85% by weight of methacrylic esters of 2,2,6,6-tetramethyl-piperidine-4-ol and from 15% to 50% of methacrylic acid ester of N,N-dimethylaminoethanol, or of N-(3-hydroxypropyl)-N'-methylpiperazine, or of a mixture of the two.

2. Process according to Claim 1, wherein the methacrylate of which Rc is the radical is a mixture consisting of:
from 50% to 85% by weight of 2,2,6,6, tetramethyl-piperidine-4-ol methacrylate, and
from 15% to 50% by weight of N,N-dimethylaminoethanol methacrylate, or N-(3-hydroxypropyl)-N'-methylpiperazine methacrylate, or any admixture of the two.

3. Process according to Claim 1, wherein the copolymerization is carried within an inert solvent-diluent, in the absence of oxygen, at a temperature of from 70°C to 130°C, and in the presence of an amount of from 0,2 to 3 parts by weight, relative to 100 parts by weight of all the methacrylates which are present, of a radicalic polymerization initiator, until such time as the conversion rating of the monomers is of from 60% to 100%.

4. Process according to Claim 3 , wherein the inert solvent-diluent is a mineral oil.

5. Process according to Claim 1, wherein the polymerization catalyst is selected from tert-butyl peroctoate, tert.butyl per(2-ethyl) hexanoate, tert.butyl perbenzoate, azo-bis-isobutyronitrile, dibenzoyl peroxide, dilauroyl peroxide and bis-(4-tert.butylcyclohexyl) peroxydicarbonate.

6. Process according , to Claim 1, wherein the copolymerization reaction is carried out in the presence of an. amount of from 0,005% to 0, % by weight, relative to all the methacrylates, of a sulphurated molecular-weight regulator selected from aliphatic mercaptans, thioglycols and thiophenols.

7. Process according to Claim 1, wherein the -Rc (meth)acrylate is a compound having the general formula: 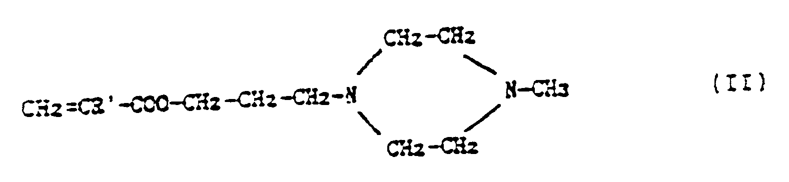 wherein R' is a hydrogen or a methyl.

8. Process for preparing a lubricant-oil concentrate characterized by comprising the step of combining together from 25% to 95% by weight of an additive of formula (I) with the balance of a mineral oil.

9. Process according to Claim 8, characterized in that the mineral oil is the same as used as an inert solvent-diluent in the preparation of the additive of formula (I).

10. Process for preparing a lubricant composition, characterized by comprising the step of combining together from 0,5% to 10% by weight of the additive of formula (I) with the balance of a conventional mineral oil.

11. Process according to Claim 10, characterized in that said lubricant composition contains from 1,2% to 6% by weight of the additive of formula (I), the balance being a conventional mineral oil.

## Patentansprüche (Patentansprüche für folgende(n) Vertragsstaat(en): AT, BE, CH, DE, DK, FR, GB, GR, LI, LU, NL, SE)

1. Polymeres Viskositätsindexverbesserer-, Dispergier- und Antioxidationsadditiv für Schmieröle für Verbrennungskraftmotoren mit der allgemeinen Formel: 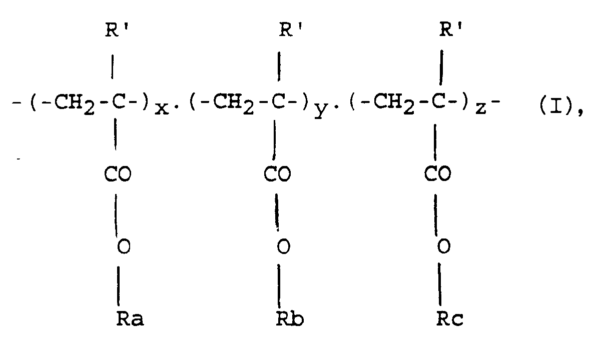 erhalten durch Copolymerisieren von ungesättigten Estern, dadurch gekennzeichnet, daß:
x von 85 bis 90 Gew.-% ausmacht;
y von 3 bis 7 Gew.-% ausmacht;
z von 4 bis 6 Gew,-% ausmacht;
R' für Methyl steht, wodurch die copolymerisierten Ester Methacrylate sind;
Ra für ein Alkyl steht, das von einem Gemisch aus natürlichen oder synthetischen, geraden oder verzweigten C₁₀-C₂₀ primären Alkoholen abgeleitet ist;
Rb Methyl bedeutet und
Rc den Rest von 2,2,6,6-Tetramethylpiperidin-4-ol bezeichnet, wodurch das Monomer CH₂=CR'-COORc das 2,2,6-6-Tetramethylpiperidin-4-ol-methacrylat ist.

2. Additiv nach Anspruch 1, worin das Methacrylat, von dem Rc den Rest darstellt, ein Gemisch ist, das aus 50 bis 85 Gew.-% 2,2,6,6-Tetramethylpiperidin-4-ol-methacrylat und 15 bis 50 Gew.-% N,N-Dimethylaminoethanol-methacrylat oder N-(3-Hydroxypropyl)-N'-methylpiperazin-methacrylat oder einem Gemisch dieser beiden besteht.

3. Verfahren zur Herstellung des Additivs nach Anspruch 1, umfassend die Stufe des Copolymerisierens eines Gemisches, das aus:
- 85 bis 90 Gew.-% Ra-Methacrylaten in Form von Methacrylsäureestern von Gemischen von C₁₀-C₂₀ natürlichen oder synthetischen, geraden oder verzweigten primären Alkoholen;
- 3 bis 7 Gew.-% Rb-Methacrylaten in Form von Methacrylsäureestern von Methanol und
- 4 bis 6 Gew.-% Rc-Methacrylaten in Form von Methacrylsäureestern von 2,2,6,6-Tetramethylpiperidin-4-ol oder eines Gemisches, bestehend aus 50 bis 85 Gew.-% Methacrylsäureestern von 2,2,6,6-Tetramethylpiperidin-4-ol und 15 bis 50 % Methacrylsäureestern von N,N-Dimethylaminoethanol oder von N-(3-Hydroxypropyl)-N'-methylpiperazin oder eines Gemisches dieser beiden,
zusammengesetzt ist.

4. Verfahren nach Anspruch 3, worin die Copolymerisation in einem inerten Lösungsmittel-Verdünnungsmittel in Abwesenheit von Sauerstoff bei einer Temperatur von 70°C bis 130°C und in Gegenwart einer Menge von 0,2 bis 3 Gewichtsteilen, bezogen auf 100 Gewichtsteile aller vorliegenden Methacrylate, eines radikalischen Polymerisationsinitiators bis zu einem Zeitpunkt ausgeführt wird, zu dem die Umwandlungsrate der Monomeren 60 bis 100 % beträgt.

5. Verfahren nach Anspruch 4, worin das inerte Lösungsmittel-Verdünnungsmittel ein Mineralöl ist.

6. Verfahren nach Anspruch 3, worin der Polymerisationskatalysator unter tert.Butylperoctoat, tert.Butylper(2-ethyl)hexanoat, tert.Butylperbenzoat, Azo-bis-isobutyronitril, Dibenzoylperoxid, Dilauroylperoxid und Bis-(4-tert.butylcyclohexyl)peroxydicarbonat ausgewählt wird.

7. Verfahren nach Anspruch 3, worin die Copolymerisationsreaktion in Gegenwart einer Menge von 0,005 bis 0,6 Gew.-%, bezogen auf alle Methacrylate, eines sulfurierten Molekulargewichtsreglers, ausgewählt unter aliphatischen Mercaptanen, Thioglykolen und Thiophenolen, vorgenommen wird.

8. Methacrylate mit der allgemeinen Formel: 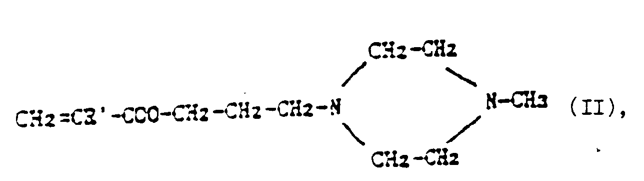 worin R' ein Wasserstoffatom oder einen Methylrest bezeichnet.

9. Schmierölkonzentrat mit einem Gehalt an 25 bis 95 Gew.-% des Additivs nach Anspruch 1, während der Rest ein Mineralöl ist.

10. Konzentrat nach den Ansprüchen 4 und 9, worin das Mineralöl das gleiche ist wie das als inertes Lösungsmittel-Verdünnungsmittel in der Herstellung des Additivs nach Anspruch 1 eingesetzte Mineralöl.

11. Schmiermittelzusammensetzung mit einem Gehalt an 0,5 bis 10 Gew.-% des in Anspruch 1 definierten Additivs, während der Rest ein konventionelles Schmieröl ist.

12. Schmiermittelzusammensetzung nach Anspruch 11 mit einem Gehalt an 1,2 bis 6 Gew.-% des Additivs nach Anspruch 1, während der Rest ein konventionelles Schmieröl ist.

## Patentansprüche (Patentansprüche für folgende(n) Vertragsstaat(en): ES)

1. Verfahren zur Herstellung eines polymeren Viskositätsindexverbesserer-, Dispergier- und Antioxidationsadditivs für Schmieröle für Verbrennungskraftmaschinen mit der allgemeinen Formel 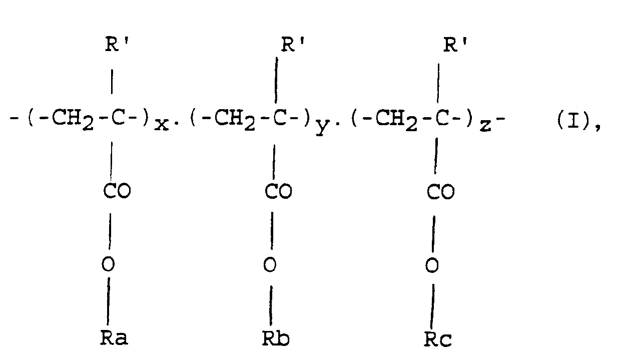 erhalten durch Copolymerisieren von ungesättigten Estern, worin:
x von 85 bis 90 Gew.-% ausmacht;
y von 3 bis 7 Gew.-% ausmacht;
z von 4 bis 6 Gew.-% ausmacht;
R' für Methyl steht, wodurch die copolymerisierten Ester Methacrylate sind;
Ra für ein Alkyl steht, das von einem Gemisch aus natürlichen oder synthetischen, geraden oder verzweigten C₁₀-C₂₀ primären Alkoholen abgeleitet ist;
Rb Methyl bedeutet und
Rc den Rest von 2,2,6,6-Tetramethylpiperidin-4-ol bezeichnet, wodurch das Monomer CH₂=CR'-COORc das 2,2,6,6-Tetramethylpiperidin-4-ol-methacrylat ist, dadurch gekennzeichnet, daß es die Stufe des Copolymerisierens eines Gemisches umfaßt, das aus
- 85 bis 90 Gew.-% Ra-Methacrylaten in Form von Methacrylsäureestern von Gemischen von C₁₀-C₂₀ natürlichen oder synthetischen, geraden oder verzweigten primären Alkoholen;
- 3 bis 7 Gew.-% Rb-Methacrylaten in Form von Methacrylsäureestern von Methanol und
- 4 bis 6 Gew.-% Rc-Methacrylaten in Form von Methacrylsäureestern von 2,2,6,6-Tetramethylpiperidin-4-ol oder eines Gemisches, bestehend aus 50 bis 85 Gew.-% Methacrylsäureestern von 2,2,6,6-Tetramethylpiperidin-4-ol und 15 bis 50 % Methacrylsäureestern von N,N-Dimethylaminoethanol oder von N-(3-Hydroxypropyl)-N'-methylpiperazin oder eines Gemisches dieser beiden,
zusammengesetzt ist.

2. Verfahren nach Anspruch 1,worin das Methacrylat, von dem Rc den Rest darstellt, ein Gemisch ist, das aus 50 bis 85 Gew.-% 2,2,6,6-Tetramethylpiperidin-4-ol-methacrylat und 15 bis 50 Gew.-% N,N-Dimethylaminoethanol-methacrylat oder N-(3-Hydroxypropyl)-N'-methylpiperazin-methacrylat oder einem Gemisch dieser beiden besteht.

3. Verfahren nach Anspruch 1, worin die Copolymerisation in einem inerten Lösungsmittel-Verdünnungsmittel in Abwesenheit von Sauerstoff bei einer Temperatur von 70°C bis 130°C und in Gegenwart einer Menge von 0,2 bis 3 Gewichtsteilen, bezogen auf 100 Gewichtsteile aller vorliegenden Methacrylate, eines radikalischen Polymerisationsinitiators bis zu einem Zeitpunkt ausgeführt wird, zu dem die Umwandlungsrate der Monomeren 60 bis 100 % beträgt.

4. Verfahren nach Anspruch 3, worin das inerte Lösungsmittel-Verdünnungsmittel ein Mineralöl ist.

5. Verfahren nach Anspruch 1, worin der Polymerisationskatalysator unter tert.Butylperoctoat, tert.Butylper(2-ethyl) hexanoat, tert.Butylperbenzoat, Azo-bis-isobutyronitril, Dibenzoylperoxid, Dilauroylperoxid und Bis-(4-tert. butylcyclohexyl)peroxydicarbonat ausgewählt wird.

6. Verfahren nach Anspruch 1, worin die Copolymerisationsreaktion in Gegenwart einer Menge von 0,005 bis 0,6 Gew.-%, bezogen auf alle Methacrylate, eines sulfurierten Molekulargewichtsreglers, ausgewählt unter aliphatischen Mercaptanen, Thioglykolen und Thiophenolen, vorgenommen wird.

7. Verfahren nach Anspruch 1, worin das (Meth)acrylat Rc eine Verbindung mit der allgemeinen Formel 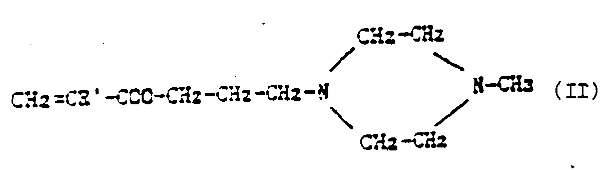 ist, worin R' für Wasserstoff oder Methyl steht.

8. Verfahren zur Herstellung eines Schmierölkonzentrats, dadurch gekennzeichnet, daß es die Stufe des Kombinierens von 25 bis 95 Gew.-% eines Additivs der Formel (I) mit dem Rest aus einem Mineralöl umfaßt.

9. Verfahren nach Anspruch 8, dadurch gekennzeichnet, daß das Mineralöl das gleiche ist, wie es als inertes Lösungsmittel-Verdünnungsmittel in der Herstellung des Additivs der Formel (I) verwendet worden ist.

10. Verfahren zur Herstellung einer Schmiermittelzusammensetzung, dadurch gekennzeichnet, daß es die Stufe des Zusammenbringens von 0,5 bis 10 Gew.-% des Additivs der Formel (I) mit dem Rest aus einem konventionellem Mineralöl umfaßt.

11. Verfahren nach Anspruch 10, dadurch gekennzeichnet, daß die Schmiermittelzusammensetzung 1,2 bis 6 Gew.-% des Additivs der Formel (I) enthält, während der Rest ein konventionelles Mineralöl ist.

## Revendications (Revendications pour l'(les) Etat(s) contractant(s) suivant(s): AT, BE, CH, DE, DK, FR, GB, GR, LI, LU, NL, SE)

1. Adjuvant polymère antioxydant, dispersant et améliorant l'indice de viscosité, destiné à des huiles lubrifiantes pour moteurs à combustion interne, de formule générale : 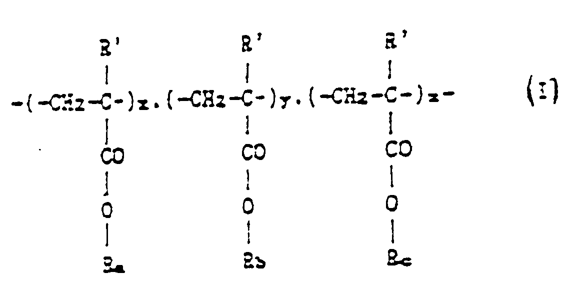 et obtenu par copolymérisation d'esters insaturés,
**caractérisé** en ce que :
x vaut de 85 % à 90 % en poids;
y vaut de 3 % à 7 % en poids;
Z vaut de 4 % à 6 % en poids;
R' représente un groupe méthyle, donc les esters copolymérisés sont des méthacrylates :
Rₐ représente un groupe alkyle dérivé d'un mélange d'alcools primaires en C₁₀₋₂₀ linéaires ou ramifiés, naturels ou synthétiques ;
Rb représente un groupe méthyle; et
Rc représente le reste du 2,2,6,6-tétraméthyl-pipéridine-4-ol, donc le monomère CH₂=CR'-COORc est le méthacrylate de 2,2,6,6-tétraméthyl-pipéridine-4-ol.

2. Adjuvant conforme à la revendication 1, dans lequel le méthacrylate comportant le reste Rc est un mélange constitué de 50 % à 85 % en poids de methacrylate de 2,2,6,6-tétraméthyl-pipéridine-4-ol et de 15 % à 50 % en poids de méthacrylate de N,N-diméthylamino-éthanol, de méthacrylate de N-(3-hydroxypropyl)-N'-méthyl-pipérazine ou de tout mélange des deux.

3. Procédé de préparation d'un adjuvant du type défini dans la revendication 1, comprenant l'étape consistant à faire copolymériser un mélange constitué de:
- 85 % à 90 % en poids de méthacrylates de Ra, sous forme d'esters d'acide méthacrylique et d'un mélange d'alcools primaires en C₁₀₋₂₀ linéaires ou ramifiés, naturels ou synthétiques ;
- 3 % à 7 % en poids de méthacrylates de Rb, sous forme d'ester de l'acide méthacrylique et du méthanol ;
- 4 % à 6 % en poids de méthacrylates de Rc, sous forme d'ester de l'acide méthacrylique et du 2,2,6,6-tétraméthyl-pipéridine-4-ol ou d'un mélange constitué de 50 % à 85 % en poids d'ester de l'acide méthacrylique et de 2,2,6,6-tétraméthyl-pipéridine-4-ol et de 15 % à 50 % en poids d'ester de l'acide méthacrylique et de N,N-diméthylamino-éthanol, de N-(3-hydroxypropyl)-N'-méthyl-pipérazine ou d'un mélange des deux.

4. Procédé conforme à la revendication 3, dans lequel on effectue la copolymérisation dans un solvant-diluant inerte, en l'absence d'oxygène, à une température de 70°C à 130°C, et en présence de 0,2 à 3 parties en poids, pour 100 parties en poids de tous les méthacrylates présents, d'un amorceur de polymérisation radicalaire, jusqu'à un moment où le taux de conversion des monomères vaut de 60 % à 100 %.

5. Procédé conforme à la revendication 4, dans lequel le solvant-diluant inerte est une huile minérale.

6. Procédé conforme à la revendication 3, dans lequel le catalyseur de polymérisation est choisi parmi le peroctoate de tertiobutyle, le 2-éthyl-perhexanoate de tertiobutyle, le perbenzoate de tertiobutyle, l'azo-bis-isobutyronitrile, le peroxyde de dibenzoyle, le peroxyde de dilauroyle et le peroxydicarbonate de bis(4-tertiobutyl-cyclohexyle).

7. Procédé conforme à la revendication 3, dans lequel on effectue la réaction de copolymérisation en présence de 0,005 % à 0,6 % en poids, par rapport à tous les méthacrylates, d'un agent soufré de limitation de la masse moléculaire, choisi parmi les mercaptans aliphatiques, les thioglycols et les thiophénols.

8. (Méth)acrylates de formule générale : 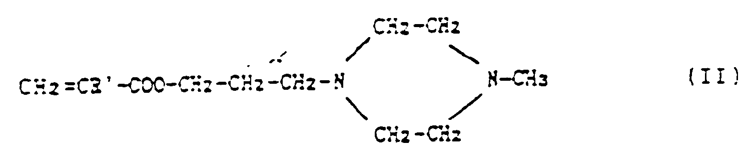 dans laquelle R' représente un atome d'hydrogène ou un groupe méthyle.

9. Concentré d'huile lubrifiante contenant de 25 % à 95 % en poids de l'adjuvant défini dans la revendication 1, le complément étant constitué par une huile minérale.

10. Concentré conforme à la revendication 4 ou 9, dans lequel ladite huile minérale est la même que celle utilisée comme solvant-diluant inerte dans la préparation de l'adjuvant défini dans la revendication 1.

11. Composition lubrifiante contenant de 0,5 % à 10 % en poids de l'adjuvant défini dans la revendication 1, le complément étant constitué par une huile lubrifiante classique.

12. Composition lubrifiante conforme à la revendication 11, contenant de 1,2 % à 6 % en poids de l'adjuvant défini dans la revendication 1, le complément étant constitué par une huile lubrifiante classique.

## Revendications (Revendications pour l'(les) Etat(s) contractant(s) suivant(s): ES)

1. Procédé de préparation d'un adjuvant polymère antioxydant, dispersant et améliorant l'indice de viscosité, destiné à des huiles lubrifiantes pour moteurs à combustion interne, de formule générale : 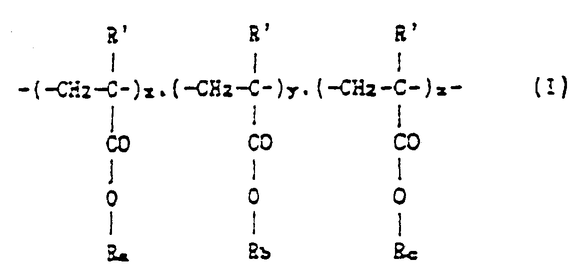 et obtenu par copolymérisation d'esters insaturés,
dans lequel:
x vaut de 85 % à 90 % en poids;
y vaut de 3 % à 7 % en poids ;
z vaut de 4 % à 6 % en poids ;
R' représente un groupe méthyle, donc les esters copolymérisés sont des méthacrylates :
Rₐ représente un groupe alkyle dérivé d'un mélange d'alcools primaires en C₁₀₋₂₀ linéaires ou ramifiés, naturels ou synthétiques ;
Rb représente un groupe méthyle; et
Rc représente le reste du 2,2,6,6-tétraméthyl-pipéridine-4-ol, donc le monomère CH₂=CR'-COORc est le méthacrylate de 2,2,6,6-tétraméthyl-pipéridine-4-ol,
**caractérisé** en ce qu'il comprend l'étape consistant à faire copolymériser un mélange constitué de:
- 85 % à 90 % en poids de méthacrylates de Ra, sous forme d'esters d'acide méthacrylique et d'un mélange d'alcools primaires en C₁₀₋₂₀ linéaires ou ramifiés, naturels ou synthétiques ;
- 3 % à 7 % en poids de méthacrylates de Rb, sous forme d'ester de l'acide méthacrylique et du méthanol ;
- 4 % à 6 % en poids de méthacrylates de Rc, sous forme d'ester de l'acide méthacrylique et du 2,2,6,6-tétraméthyl-pipéridine-4-ol ou d'un mélange constitué de 50 % à 85 % en poids d'ester de l'acide méthacrylique et de 2,2,6,6-tétraméthyl-pipéridine-4-ol et de 15 % à 50 % en poids d'ester de l'acide méthacrylique et de N,N-diméthylamino-éthanol, de N-(3-hydroxypropyl)-N'-méthyl-pipérazine ou d'un mélange des deux.

2. Procédé conforme à la revendication 1, dans lequel le méthacrylate comportant le reste Rc est un mélange constitué de 50 % à 85 % en poids de méthacrylate de 2,2,6,6-tétraméthyl-pipéridine-4-ol et de 15 % à 50 % en poids de méthacrylate de N,N-diméthylamino-éthanol, de méthacrylate de N-(3-hydroxypropyl)-N'-méthyl-pipérazine ou de tout mélange des deux.

3. Procédé conforme à la revendication 1, dans lequel on effectue la copolymérisation dans un solvant-diluant inerte, en l'absence d'oxygène, à une température de 70°C à 130°C, et en présence de 0,2 à 3 parties en poids, pour 100 parties en poids de tous les méthacrylates présents, d'un amorceur de polymérisation radicalaire, jusqu'à un moment où le taux de conversion des monomères vaut de 60 % à 100 %.

4. Procédé conforme à la revendication 3, dans lequel le solvant-diluant inerte est une huile minérale.

5. Procédé conforme à la revendication 1, dans lequel le catalyseur de polymérisation est choisi parmi le peroctoate de tertiobutyle, le 2-éthyl-perhexanoate de tertiobutyle, le perbenzoate de tertiobutyle, l'azo-bis-isobutyronitrile, le peroxyde de dibenzoyle, le peroxyde de dilauroyle et le peroxydicarbonate de bis(4-tertiobutyl-cyclohexyle).

6. Procédé conforme à la revendication 1, dans lequel on effectue la réaction de copolymérisation en présence de 0,005 % à 0,6 % en poids, par rapport à tous les méthacrylates, d'un agent soufré de limitation de la masse moléculaire, choisi parmi les mercaptans aliphatiques, les thioglycols et les thiophénols.

7. Procédé conforme à la revendication 1, dans lequel le (méth)acrylate Rc est un composé de formule générale : 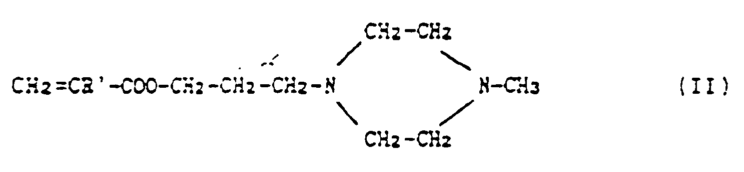 dans laquelle R' représente un atome d'hydrogène ou un groupe méthyle.

8. Procédé de préparation d'un concentré d'huile lubrifiante, caractérisé en ce qu'il comprend l'étape consistant à combiner de 25 % à 95 % en poids d'un adjuvant de formule (I) avec un complément constitué par une huile minérale.

9. Procédé conforme à la revendication 8, caractérisé en ce que l'huile minérale est la même que celle utilisée comme solvant-diluant inerte dans la préparation de l'adjuvant de formule (I).

10. Procédé de préparation d'une composition lubrifiante, caractérisé en ce qu'il comprend l'étape consistant à combiner de 0,5 % à 10 % en poids de l'adjuvant de formule (I) avec un complément constitué par une huile lubrifiante classique.

11. Procédé conforme à la revendication 10, caractérisé en ce que la composition lubrifiante contient de 1,2 % à 6 % en poids de l'adjuvant de formule (I), le complément étant constitué par une huile lubrifiante classique.
